# EUROPÄISCHE PATENTSCHRIFT

(11) **EP 0 621 411 B1**
(45) Veröffentlichungstag und Bekanntmachung des Hinweises auf die Patenterteilung: **09.10.1996**
(21) Anmeldenummer: 93120407.7
(22) Anmeldetag: 17.12.1993
(51) Int. Cl.: F16C 13/00

(54) **Kunststoffwalze**
Composite roll
Rouleau en matière plastique

(30) Priorität: 20.04.1993 DE 4312827
(43) Veröffentlichungstag der Anmeldung: 26.10.1994
(73) Patentinhaber: Firma Carl Freudenberg, D-69469 Weinheim (DE)
(72) Erfinder: Pfirrmann, Horst, D-69517 Gorxheimertal (DE); Iffland, Burkhard, D-69469 Weinheim (DE); Dr. Freudenberg, U., D-74889 Sinsheim (DE); Gorges, Dirk, D-68167 Mannheim (DE)

(56) Entgegenhaltungen:
- WO-A-91/19111
- DE-U- 8 322 639
- GB-A- 2 138 921
- US-A- 4 131 701
- US-A- 4 331 497

## Beschreibung

Die Erfindung betrifft eine auf stirnseitigen Lagerzapfen abgestützte, faserverstärkte und kernlose Kunststoffwalze mit einem hohlzylindrischen Walzenkörper.

Eine solche Kunststoffwalze ist bekannt. Sie hat aufgrund der geringen Dichte des den Walzenkörper bildenden Kunststoffes eine geringe Trägheitsmasse, was es erlaubt, die Umlaufgeschwindigkeit ohne nennenswerten Energieaufwand schnell zu ändern und an besondere Gegebenheiten anzupassen. Die Biegefestigkeit ist indessen bei großen Baulängen wenig befriedigend. Es ist zwar bekannt, die Wandstärke zur Verbesserung der diesbezüglichen Eigenschaften in Richtung der Mitte des Walzenkörpers zunehmend zu vergrößern. Das ist aber mit besonderem Herstellungsaufwand verbunden. Die sich in Richtung der Mitte zunehmend vergrößernde Wandstärke des Walzenmantels bedingt außerdem eine Vergrößerung der Trägheitsmasse. Abbremsung und Beschleunigung erfordern dadurch einen vergleichsweisen größeren Energieeinsatz.

Der Erfindung liegt die Aufgabe zugrunde, eine Kunststoffwalze der eingangs genannten Art derart weiterzuentwickeln, daß sich unter Vermeidung einer nennenswerten Vergrößerung der Trägheitsmasse eine verbesserte Biegefestigkeit ergibt.

Diese Aufgabe wird erfindungsgemäß bei einer Kunststoffwalze der eingangs genannten Art dadurch gelöst, daß der Walzenkörper aus mindestens drei einander in Richtung der Längsachse benachbarten Teilkörpern besteht, die untereinander verbunden sind und daß die Teilkörper so nebeneinander angeordnet sind, daß ihre Biegefestigkeiten von den Stirnseiten in Richtung zur Mitte des Walzenkörpers hin zunehmen.

Die Teilkörper können eine im wesentlichen übereinstimmende Wandstärke haben und durch die Stoßstellen innenseitig überlappende Muffen miteinander verbunden sein, beispielsweise durch eine gegenseitige Verklebung der Muffen mit den Teilkörpern. Die Teilkörper können bei einer entsprechenden Ausbildung aus einem Sortiment ausgewählt und zu einer Kunststoffwalze beliebiger Länge zusammengesetzt werden. Die Anpassung an besondere Gegebenheiten des Anwendungsfalles ist dadurch ganz besonders einfach.

Die den stirnseitigen Enden der Kunststoffwalze zugewandten Teilkörper können aus einem Kunststoff mit kleinerer Biegefestigkeit bestehen als der oder die in der Mitte angeordneten Teilkörper. Desweiteren ist es möglich, daß zumindest der oder die in der Mitte angeordneten Teilkörper durch ein in den Kunststoff eingebettetes Fasergebilde verstärkt sind. Auch bei Verwendung von Teilkörpern, die sämtlich aus einem übereinstimmenden Kunststoff erzeugt sind, lassen sich hierdurch Ausführungen erhalten, die sich von den anderen durch eine vergleichsweise größere Biegefestigkeit unterscheiden. Die gegenseitige Verbindung einander in axialer Richtung benachbarter Teilkörper ist in einem solchen Falle ganz besonders einfach.

Das Fasergebilde kann aus eigenfest verbundenen Fasern bestehen. Als besonders zweckmäßig hat es sich erwiesen, wenn das Fasergebilde aus sich im wesentlichen parellel zueinander erstreckenden Fasersträngen besteht, wobei die Faserstränge nach Art eines Schraubenganges in den Kunststoff eingebettet sind. Bezogen auf die Menge der eingearbeiteten Faserstränge läßt sich hierdurch eine ganz besonders große Steigerung der Biegefestigkeit und Torsionsfestigkeit erzielen.

Die Faserstränge können mit der Längsachse der Teilkörper einen Winkel von 0 bis 45°, bevorzugt von 5 bis 35° einschließen. Als zweckmäßig hat es sich erwiesen, wenn in den Kunststoff eines jeden Teilkörpers einander überkreuzende Faserstränge eingebettet sind.

Nach einer vorteilhaften Ausgestaltung ist es vorgesehen, daß der oder die in der Mitte angeordneten Teilkörper in vergleichsweise stärkerem Maße durch Fasern verstärkt sind als die den stirnseitigen Enden zugewandten Teilkörper. Eine solche Ausbildung läßt sich erreichen, in dem in den Kunststoff der Teilkörper, die in vergleichsweise stärkerem Maße zu verfestigen sind, Faserstränge eingebettet werden, die sich durch eine vergleichsweise größere Faserdichte, durch größere Faserdurchmesser und/oder eine zugfestere Faserart von den in den Kunststoff der anderen Teilkörper eingebetteten Fasersträngen unterscheiden. Die mechanischen Eigenschaften der einzelnen Fasertypen sind an sich bekannt. Neben Glasfasern gelangen im Rahmen der vorliegenden Erfindung vor allem Kohlenstoffasern in bezug auf die Armierung der Teilkörper zu Anwendung.

Ein weiterer hervorzuhebender Vorteil der erfindungsgemäßen Kunststoffwalze besteht darin, daß die Erzeugung großer Baulängen nicht mehr davon abhängig ist, daß entsprechend lange Herstellungs- und Wickelmaschinen zur Verfügung stehen. Es genügen vielmehr Einrichtungen, die gerade so lang sind, wie für die Erzeugung eines einzelnen Teilkörpers erforderlich.

Der Gegenstand der Erfindung wird nachfolgend anhand der Zeichnungen weiter verdeutlicht. Es zeigen:

Fig. 1 eine Kunststoffwalze in längsgeschnittener Darstellung.

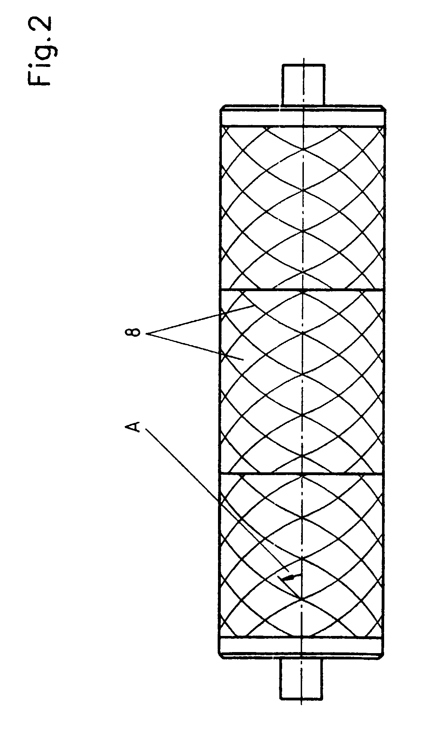

Fig. 2 die Kunststoffwalze gemäß Fig. 1 in einer Ansicht von vorn.

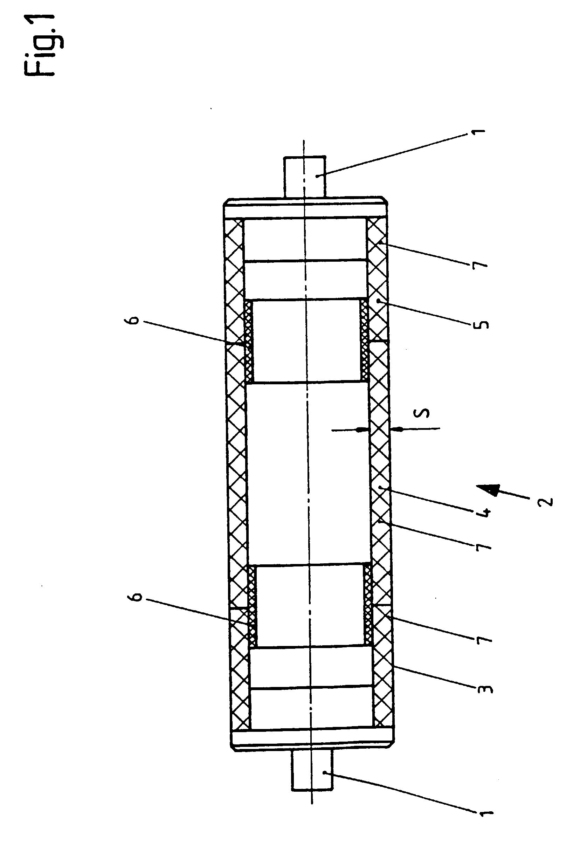

Die in Fig. 1 gezeigte Kunststoffwalze umfaßt einen auf stirnseitigen Lagerzapfen 1 abgestützten, faserverstärkten, kernlosen, hohlzylindrischen Walzenkörper 2, der aus einander in Richtung der Längsachse benachbarten Teilkörpern 3, 4, 5 besteht, die untereinander verbunden sind, wobei die Teilkörper 3, 4, 5 eine von den Stirnseiten in Richtung der Mitte des zweiten Körpers 4 zunehmende Biegefestigkeit haben. Die Teilkörper 3, 4, 5 haben eine im wesentlichen übereinstimmende Wandstärke . Sie sind durch die Stoßstellen innenseitig überlappende Muffen 6 miteinander verklebt.

Der die Teilkörper 3, 4, 5 bildende Kunststoff ist ein faserverstärktes Kunstharz, beispielsweise Epoxydharz. In ihm sind Faserstränge 8 eingebettet, die mit der Längsachse der Teilkörper einen Winkel einschließen und einander überkreuzen. In die Teilkörper 3, 5 die den Stirnseiten des Kunststoffwalze zugewandt sind, sind Faserstränge eingebettet, die aus Glasfasern bestehen, in denen in der Mitte angeordneten Teilkörper 4 Faserstränge, die aus Kohlenstoffasern bestehen. Die Faserstränge können auch vor ihrer Einbettung in den den Walzenkörper bildenden Kunststoff nach Art eines eigenstabilen Fasergebildes 7 vereint sein, beispielsweise nach Art eines Gewebes, was die geordnete Einbettung in den Kunststoff vereinfacht.

## Patentansprüche

1. Auf stirnseitigen Lagerzapfen abgestützte, faserverstärkte und kernlose Kunststoffwalze mit einem hohlzylindrischen Walzenkörper, dadurch gekennzeichnet, daß der Walzenkörper (2) aus mindestens drei einander in Richtung der Längsachse benachbarten Teilkörpern (3, 4, 5) besteht, die untereinander verbunden sind und daß die Teilkörper (3, 4, 5) so nebeneinander angeordnet sind, daß ihre Biegefestigkeiten von den Stirnseiten in Richtung zur Mitte des Walzenkörpers (2) hin zunehmen.

2. Kunststoffwalze nach Anspruch 1, dadurch gekennzeichnet, daß alle Teilkörper (3, 4, 5) eine im wesentlichen übereinstimmende Wandstärke (5) haben und durch die Stoßstellen innenseitig überlappende Muffen (6) miteinander verbunden sind.

3. Kunststoffwalze nach Anspruch 3, dadurch gekennzeichnet, daß die Muffen (6) und die Teilkörper (3, 4, 5) verklebt sind.

4. Kunststoffwalze nach Anspruch 1 bis 4, dadurch gekennzeichnet, daß die den stirnseitigen Enden zugewandten Teilkörper (3, 4, 5) aus einem Kunststoff mit kleinerer Biegefestigkeit bestehen als der in der Mitte angeordneten Teilkörper (4).

5. Kunststoffwalze nach Anspruch 1 bis 4, dadurch gekennzeichnet, daß zumindest der in der Mitte angeordnete Teilkörper (4) durch ein in den Kunststoff eingebettetes Fasergebilde (7) verstärkt ist.

6. Kunststoffwalze nach Anspruch 5, dadurch gekennzeichnet, daß das Fasergebilde (7) aus sich im wesentlichen parallel zueinander erstreckenden Fasersträngen (8) besteht und daß die Faserstränge nach Art eines Schraubenganges in den Kunststoff eingebettet sind.

7. Kunststoffwalze nach Anspruch 6, dadurch gekennzeichnet, daß die Faserstränge (8) mit der Längsachse der Teilkörper einen Winkel (1) von 0 bis 45° einschließen.

8. Kunststoffwalze nach Anspruch 6 bis 7, dadurch gekennzeichnet, daß in dem Kunststoff einander überkreuzender Faserstränge (8) vorgesehen sind.

9. Kunststoffwalze nach Anspruch 5 bis 8, dadurch gekennzeichnet, daß der oder die die in der Mitte angeordneten Teilkörper (4) in vergleichsweise stärkerem Maße durch Fasern verstärkt sind als die den stirnseitigen Enden zugewandten Teilkörper (3, 5).

## Claims

1. A fibre-reinforced and coreless plastic roller supported on end-face bearing journals, and having a hollow-cylindrical roller body, characterized in that the roller body (2) consists of at least three partial bodies (3, 4, 5) which are adjacent to one another in the direction of the longitudinal axis and are joined together, and in that the partial bodies (3, 4, 5) are arranged adjacently in such a way that their bending strengths increase from the end faces in the direction towards the middle of the roller body (2).

2. A plastic roller according to claim 1, characterized in that all partial bodies (3,4, 5) have essentially the same wall thickness (5) and are joined together by bushes (6) overlapping the joints on the inner side.

3. A plastic roller according to claim 2, characterized in that the bushes (6) and the partial bodies (3, 4, 5) are bonded.

4. A plastic roller according to any of claims 1 to 3, characterized in that the partial bodies (3, 5) adjoining the end-face ends consist of a plastic with a lower bending strength than the partial body (4) arranged in the middle.

5. A plastic roller according to any of claims 1 to 4, characterized in that at least the partial body (4) arranged in the middle is reinforced by a fibre structure (7) embedded in the plastic.

6. A plastic roller according to claim 5, characterized in that the fibre structure (7) consists of fibre strands (8) extending essentially parallel to one another, and in that the fibre strands are embedded in the plastic in the manner of a thread turn.

7. A plastic roller according to claim 6, characterized in that the fibre strands (8) enclose an angle (1) of from 0 to 45° with the longitudinal axis of the partial bodies.

8. A plastic roller according to any of claims 6 to 7, characterized in that fibre strands (8) crossing one another are provided in the plastic.

9. A plastic roller according to any of claims 5 to 8, characterized in that the partial body or partial bodies (4) arranged in the middle are reinforced by fibres to a comparatively greater extent than the partial bodies (3, 5) adjoining the end-face ends.

## Revendications

1. Rouleau en matière plastique sans noyau, renforcé par fibres et supporté sur des tourillons situés sur ses côtés frontaux, comprenant un corps de rouleau en forme de cylindre creux, caractérisé en ce que le corps de rouleau (2) est formé par au moins trois corps partiels (3, 4, 5) contigus les uns aux autres dans la direction de l'axe longitudinal, qui sont reliés les uns aux autres, et en ce que les corps partiels (3, 4, 5) sont disposés les uns à côté des autres de manière à ce que leurs résistances à la flexion augmentent des côtés frontaux en direction du milieu du corps de rouleau (2).

2. Rouleau en matière plastique selon la revendication 1, caractérisé en ce que tous les corps partiels (3, 4, 5) ont une épaisseur de paroi (5) essentiellement égale et sont reliés les uns aux autres par des manchons (6) qui recouvrent les joints sur le côté intérieur.

3. Rouleau en matière plastique selon la revendication 3, caractérisé en ce que les manchons (6) et les corps partiels (3, 4, 5) sont collés.

4. Rouleau en matière plastique selon l'une des revendications 1 à 4, caractérisé en ce que les corps partiels (3, 4, 5) situés du côté des extrémités frontales sont formés d'une matière plastique ayant une plus petite résistance à la flexion que les corps partiels (4) situés au milieu.

5. Rouleau en matière plastique selon l'une des revendications 1 à 4, caractérisé en ce qu'au moins le corps partiel (4) situé au milieu est renforcé par une structure en fibres (7) insérée dans la matière plastique.

6. Rouleau en matière plastique selon la revendication 5, caractérisé en ce que la structure en fibres (7) est formée par des cordes de fibres (8) s'étendant essentiellement de manière parallèle les unes par rapport aux autres, et en ce que les cordes de fibres sont insérées dans la matière plastique à la façon d'une hélice.

7. Rouleau en matière plastique selon la revendication 6, caractérisé en ce que les cordes de fibres (8) forment avec l'axe longitudinal des corps partiels un angle (1) mesurant de 0 à 45 .

8. Rouleau en matière plastique selon l'une des revendications 6 à 7, caractérisé en ce que des cordes de fibres (8) se croisant sont prévues dans la matière plastique.

9. Rouleau en matière plastique selon l'une des revendications 5 à 8, caractérisé en ce que le ou les corps partiel/s (4) situé/s au milieu est/sont renforcé/s par des fibres de manière relativement plus forte que les corps partiels (3, 5) situés du côté des extrémités frontales.
